# EUROPÄISCHE PATENTSCHRIFT

(11) **EP 2 158 647 B1**
(45) Veröffentlichungstag und Bekanntmachung des Hinweises auf die Patenterteilung: **07.01.2015**
(21) Anmeldenummer: 08760779.2
(22) Anmeldetag: 10.06.2008
(51) Int. Cl.: H01R 25/14, H01R 13/506, B60M 1/34, B60M 1/30

(54) **ISOLIERPROFIL FÜR EINE SCHLEIFLEITUNG**
INSULATING PROFILE FOR A CONDUCTOR LINE
PROFILE ISOLANT POUR RAIL CONDUCTEUR

(30) Priorität: 11.06.2007 DE 102007026906
(43) Veröffentlichungstag der Anmeldung: 03.03.2010
(73) Patentinhaber: Conductix-Wampfler GmbH, 79576 Weil am Rhein-Märkt (DE)
(72) Erfinder: SCHMIEDLE, Andreas, 79541 Lörrach (DE); MUTZ, Jörg, 79427 Eschbach (DE)
(74) Vertreter: Charrier, Rapp & Liebau
(86) Internationale Anmeldenummer: PCT/EP2008/057219
(87) Internationale Veröffentlichungsnummer: WO 2008/152032

(56) Entgegenhaltungen:
- EP-A- 1 750 342
- DE-A1- 3 024 395
- DE-A1- 10 359 541
- DE-U1- 20 105 232

## Beschreibung

Die Erfindung betrifft ein Isolierprofil für eine Schleifleitung nach dem Oberbegriff des Anspruchs 1. Solche Isolierprofile sind beispielsweise aus der DE 103 59 541 A1 und aus der DE 199 17 309 A1 bekannt. Es handelt sich dabei jeweils um ein einstückiges Kunststoff-Extrusionsprofil, in dem die Stromschienen einer mehrpoligen Schleifleitung voneinander isoliert angeordnet sind. Das Profil besteht aus einer Vielzahl von Kammern, von denen eine Gruppe zur Vorderseite des Profils hin offen ist. In den Kammern dieser Gruppe sind die Stromschienen angeordnet und von der offenen Vorderseite her für die Stromabnehmer eines entlang der Schleifleitung fahrenden Fahrzeugs zugänglich. Zwei andere Gruppen von Kammern, die im Querschnitt geschlossen sind, bilden die rückseitige Basis des Profils bzw. die Isolation zwischen den Stromschienen.

Ein weiteres Isolierprofil ist aus der DE 201 05 232 U1 bekannt. Dieses Isolierprofil ist Bestandteil einer Halterung und Stromversorgung für Leuchten, die an einer beliebigen Stelle entlang der Halterung befestigt werden können. Bei der Befestigung einer Leuchte werden durch einen Stecker der Leuchte zugleich Stromschienen in dem Isolierprofil kontaktiert und dadurch die Stromversorgung der Leuchte hergestellt. Die Wände der Nuten, in denen sich die Stromschienen befinden, sind nach außen konisch erweitert, um das Einstecken des Steckers zu erleichtern. Die EP 1 750 342 A1 zeigt ein Isolierprofil, in dem mehrere Stromschienen angeordnet und dabei hermetisch gegen die Umgebung abgedichtet sind. Dieses Isolierprofil ist zum Einsatz in der elektrischen Ausrüstung von Gebäuden bestimmt und soll durch seine Abdichtung unempfindlich gegen Feuchtigkeit, insbesondere in Form von Tropf- und Sickerwasser sein.

Schließlich ist aus der DE 30 24 395 A1 noch ein Isolierprofil für eine mehrpolige Schleifleitung bekannt, bei dem die zur Vorderseite des Profils hin offenen Kammern, in denen Stromschienen angeordnet und von außen durch Stromabnehmer kontaktierbar sind, sich trichterförmig so erweitern, dass die Vorderseite des Isolierprofils überall eine Neigung zur jeweils nächstgelegenen Stromschiene hin aufweist.

Schleifleitungen der eingangs genannten Art haben im allgemeinen eine Gesamtlänge, die es erfordert, mehrere Isolierprofile stirnseitig aufeinanderfolgend anzuordnen. Dabei muß eine mechanisch stabile Verbindung zwischen den einzelnen Isolierprofilen einer Schleifleitung geschaffen werden, wozu geeignete Verbindungselemente eingesetzt werden. Zum Eingriff mit solchen Verbindungselementen ist eine entsprechende Formgebung der Endbereiche der Isolierprofile notwendig, die nicht im Rahmen der Extrusion erfolgen kann, sondern eine nachträgliche Bearbeitung erfordert, wodurch sich der Herstellungsaufwand erhöht.

Darüber hinaus besteht das Problem, dass an den Verbindungsstellen zwischen den einzelnen Isolierprofilen einer mehrpoligen Schleifleitung die isolierende Wirkung unterbrochen ist. Dort treffen die Längen der Luft- und Kriechstrecken zwischen den einzelnen Stromschienen, d.h. der kürzesten Wege zwischen den Oberflächen zweier benachbarter Stromschienen durch den freien Raum bzw. entlang der Oberfläche des Isolierprofils, die entlang eines Isolierprofils durch dessen Querschnittsform vorgegeben sind, nicht mehr zu. Vielmehr sind an einer solchen Verbindungsstelle, wenn nicht zusätzliche Maßnahmen getroffen werden, die Länge der Luftstrecke durch den direkten Abstand zweier benachbarter Stromschienen und die Länge der Kriechstrecke durch den kürzesten Weg zwischen zwei benachbarten Stromschienen auf der Stirnseite des Isolierprofils gegeben. Diese an einer Verbindungsstelle wirksamen Längen sind im allgemeinen deutlich kürzer als die entsprechenden Längen entlang des Isolierprofils.

Die Längen der Luft- und Kriechstrecken unterliegen einschlägigen Sicherheitsvorschriften, die unter dem Gesichtspunkt der Produkthaftung eingehalten werden müssen, und zwar entlang einer gesamten Schleifleitung, d.h. auch an besagten Verbindungsstellen. Dies ist natürlich um so schwieriger zu erreichen, je kompakter die Gesamtabmessungen einer Schleifleitung sein sollen. Eine Möglichkeit zur Verlängerung der Luft- und Kriechstrecken an den Verbindungsstellen zwischen den einzelnen Isolierprofilen auf sicherheitstechnisch vorschriftsmäßige Werte besteht in der Einfügung zusätzlicher Isolationselemente in diesem Bereich im Zuge des Zusammenbaus der einzelnen Isolierprofile. Hierzu müssen die Endbereiche der Isolierprofile zur Aufnahme besagter Isolationselemente vorbereitet werden, wodurch weiterer Aufwand bei der Herstellung der Isolierprofile verursacht wird. Dies gilt insbesondere dann, wenn dabei eine nachträgliche Bearbeitung der Isolierprofile von den Stirnseiten her vorgenommen werden muss.

Auf der Vorder- oder Eingriffsseite eines Isolierprofils schaffen bestehende Systeme die notwendigen Kriechstrecken durch einzelne nach vorne abragende Stege, die im Querschnitt Hörnern ähnlich sehen. Diese abragenden Stege lassen sich beim Extrudieren leicht herstellen, da sie von allen Seiten erreichbar und daher bei der Abkühlung leicht kalibrierbar sind. Außerdem lassen sie es zu, dass ein dahinter liegender, zwei solche einander benachbarte Stege verbindender Quersteg bei der Abkühlung zumindest einseitig für das umgebende Medium erreichbar bleibt. Sie verbessern sogar die Erreichbarkeit einer Formstabilität für einen solchen Quersteg, indem über die abragenden Stege eine Zugkraft auf den Quersteg aufgebracht werden kann, die ihn am schwinden hindert.

In einem Abschnitt der Schleifleitung, in dem Stromabnehmer von außen in das Isolierprofil eingeführt werden sollen, d.h. im Bereich einer sogenannten Tangentialeinfahrt, stören die nach vorne abragenden Stege, da ein Stromabnehmer bei einer in der Praxis häufig unvermeidlichen seitlichen Positionsabweichung an einem solchen abragenden Steg hängen bleiben und sogar auf einen zwei solche einander benachbarte Stege verbindenden Quersteg anstatt in eine Kammer mit einer Stromschiene gelangen kann. Um dies zu vermeiden, muss der Querschnitt des Isolierprofils in einem solchen Bereich trichterförmig ausgelegt werden, um einen seitlich fehlpositionierten Stromabnehmer stets in die nächstgelegene Kammer mit einer Stromschiene abzulenken. Hierzu muss jeweils zwischen zwei Kammern mit Stromschienen ein zusätzliches Bauteil auf der Vorderseite des Isolierprofils aufgebracht werden, das folgende Anforderungen erfüllt:
- Auffüllen des Querschnitts von der bestehenden Hörnerform zu einer dachartigen Form
- Feste Verbindung des aufzubringenden Teils mit dem Isolierprofil auch unter Temperaturschwankungen und Verformungen
- Keine Ausbildung von nennenswerten Spalten zwischen dem aufgebrachten Teil und dem Isolierprofil
- Keine Unterbrechung der Isolationsbauteile und keine Abkürzung von Kriechwegen
- Keine Kollision mit Stromabnehmern
- Kontinuierlicher Übergang in Längsrichtung des Profils vom Bereich des Trichters in den Bereich ohne diese Funktion

Es wird typischerweise aufgrund der ersten und der beiden letztgenannten Anforderungen kein Hohlprofil, sondern ein massives Bauteil verwendet, welches an seinen Längsenden entsprechend abgeschrägt ist. Dieses Bauteil wird dann zumeist aufgeklebt, da Kunststoffschrauben oder -nieten in Bauräume der hier vorliegenden Art kaum einzubringen sind und Metallschrauben Abkürzungen für den Kriechweg bilden und ein Risikopotenzial bei einem Kontakt mit den Stromschienen durch Fehlmontage bieten würden. Da Klebungen sensibel sind, finden diese meist bereits im Werk statt. Dadurch ergibt sich ein hoher Planungs-, Informations- und Logistikaufwand, da die entlang einer Schleifleitung benötigten Stellen mit der Möglichkeit einer Tangentialeinfahrt im Vorfeld festgelegt, die erforderlichen Längen dazwischen ermittelt und das Material entsprechend disponiert werden muss. Außerdem muss vermieden werden, dass an diesen Stellen Stromeinspeisungen, Dehnverbinder oder ähnliches eingesetzt werden sollen, da diese Teile zumeist nicht oder nur mit hohem Aufwand mit einer Tangentialtrichterfunktion versehen werden können.

In Anbetracht dessen besteht eine Aufgabe der Erfindung darin, ein Isolierprofil für eine Schleifleitung zu schaffen, das einen besonders zuverlässigen Betrieb der Schleifleitung gewährleistet und eine rationelle Herstellung erleichtert.

Diese Aufgabe wird erfindungsgemäß durch ein Isolierprofil mit den Merkmalen des Anspruchs 1 gelöst. Vorteilhafte Ausgestaltungen der Erfindung sind in den Unteransprüchen angegeben.

Erfindungsgemäß erweitert sich die Öffnung einer zur Halterung einer Stromschiene geeigneten offenen Kammer an der Vorderseite eines Isolierprofils dergestalt in seitlicher Richtung, dass die Oberfläche der Vorderseite des Isolierprofils an jeder Stelle zur Mitte der jeweils nächstliegenden offenen Kammer hin geneigt ist. Dies hat die Wirkung, die Stromabnehmer bei der Einführung in das Isolierprofil im Fall einer geringfügigen seitlichen Fehlpositionierung an jeder Stelle in die richtige Richtung, d.h. auf die jeweils zu kontaktierende Stromschiene zu, abzulenken. Eine solche Ablenkung ist insbesondere für die sogenannte Tangentialeinfahrt von Interesse, wenn das zu versorgende Fahrzeug eine Kurve fährt und die benutzte Schleifleitung wechseln muß. Dann müssen die Stromabnehmer die neu zu benutzende Schleifleitung erstmalig kontaktieren und hierzu tangential in die offenen Kammern mit den Stromschienen eintauchen. Da die Bewegungsbahn eines Fahrzeugs und damit auch die seiner Stromabnehmer unvermeidbar mit gewissen Toleranzen behaftet ist, muß bei einer Tangentialeinfahrt stets mit einer gewissen seitlichen Fehlpositionierung der Stromabnehmer gegenüber der Schleifleitung gerechnet werden. Dieses Problem wird durch die geneigte Formgebung der Oberfläche der Vorderseite des Isolierprofils, die eine selbsttätige Positionskorrektur der Stromabnehmer beim Eintauchen in das Isolierprofil bewirkt, deutlich entschärft.

Erfindungsgemäß stellt das als einstückiges Bauteil ausgeführte Isolierprofil entlang seiner gesamten Länge die Funktion eines Tangentialtrichters bereit, wobei der im Querschnitt trichterförmige Bereich ein integraler Bestandteil des Isolierprofils ist, so dass weder eine Montage von Zusatzteilen, noch eine Berücksichtigung der Tangentialeinfahrtstellen bei der Anlagenplanung erforderlich ist. Vielmehr kann die Schleifleitung entlang der gesamten Strecke zur Tangentialeinfahrt verwendet werden.

Besagte geneigte Formgebung der zwischen den Öffnungen der offenen Kammern befindlichen Wandabschnitte des Isolierprofils ermöglicht es auch, zu einer formschlüssigen Verbindung zweier Isolierprofile erfindungsgemäß vorgesehene Öffnungen nahe jeder Stirnseite des Profils in diesen Wandabschnitten rationell durch einen einzigen Sägeschnitt in Querrichtung des Isolierprofils zu erzeugen. Dabei ist die Ausdehnung der Öffnungen in Längsrichtung des Profils durch die Schnittbreite und die Ausdehnung in Querrichtung durch die Schnitttiefe vorgebbar.

Bei einem Isolierprofil für eine mehrpolige Schleifleitung, welches eine regelmäßige Anordnung von mehreren sich in Längsrichtung des Profils erstreckenden Kammern aufweist, ist es zweckmäßig, dass sich die Kammern einer geschlossenen Gruppe von Kammern von der durch Wandabschnitte mehrerer nebeneinander liegender geschlossener Kammern gebildeten Rückwand des Isolierprofils aus in Richtung der offenen Vorderseite des Profils, die durch eine Gruppe von nach einer Seite hin offenen Kammern definiert wird, bis über die vorgesehene Position der vorderen Oberflächen der Stromschienen in den offenen Kammern hinaus erstrecken, und dass jeweils mindestens eine geschlossene Kammer dieser Gruppe zwischen zwei benachbarten offenen Kammern angeordnet ist.Auf diese Weise können nämlich zwischen den Bereichen zweier benachbarter offener Kammern, in denen sich im fertigen Zustand der Schleifleitung Stromschienen befinden, an Verbindungsstellen zwischen stirnseitig aneinander anschließenden Isolierprofilen ausreichend lange Luft- und Kriechstrecken gewährleistet werden, welche die einschlägigen Sicherheitsvorschriften erfüllen, ohne dass hierzu eine Bearbeitung der Isolierprofile von den Stirnseiten her erforderlich wäre. Vielmehr können die Stirnflächen einfach plan bleiben.

Unter dem Gesichtspunkt der mechanischen Stabilität des Isolierprofils ist es vorteilhaft, den durch die Querschnittskonturen des Isolierprofils vorgegebenen Raum durch die Bildung weiterer Gruppen geschlossener Kammern in kleinere Einheiten zu unterteilen, da die zusätzlichen Kammertrennwände dem Profil eine höhere Stabilität verleihen. Eine weitere nützliche Maßnahme bei der Formgebung des Isolierprofils ist die einstückige Anformung von Befestigungselementen zur Befestigung an einem Trägerprofil an seiner Rückwand.

Weitere Einzelheiten und Vorteile der Erfindung gehen aus den Unteransprüchen und aus der nachfolgenden Beschreibung eines Ausführungsbeispiels anhand der Zeichnungen hervor. In den Zeichnungen zeigt
- Fig. 1: eine Querschnittsansicht eines erfindungsgemäßen Isolierprofils,
- Fig. 2: eine Querschnittsansicht des Isolierprofils von Fig. 1 in Verbindung mit einem Trägerprofil,
- Fig. 3: eine perspektivische Ansicht des Isolierprofils von Fig. 1,
- Fig. 4: eine perspektivische Ansicht eines Ausschnitts des Isolierprofils von Fig. 1 mit erfindungsgemäßen Verbindungselementen in zwei verschiedenen Positionen, und
- Fig. 5: ein erfindungsgemäßes Verbindungselement in vier verschiedenen Ansichten,
- Fig. 6: eine Querschnittsansicht eines vergrößerten Ausschnitts des Isolierprofils von Fig. 1 mit einem darin befindlichen Stecker eines Verbindungselements.

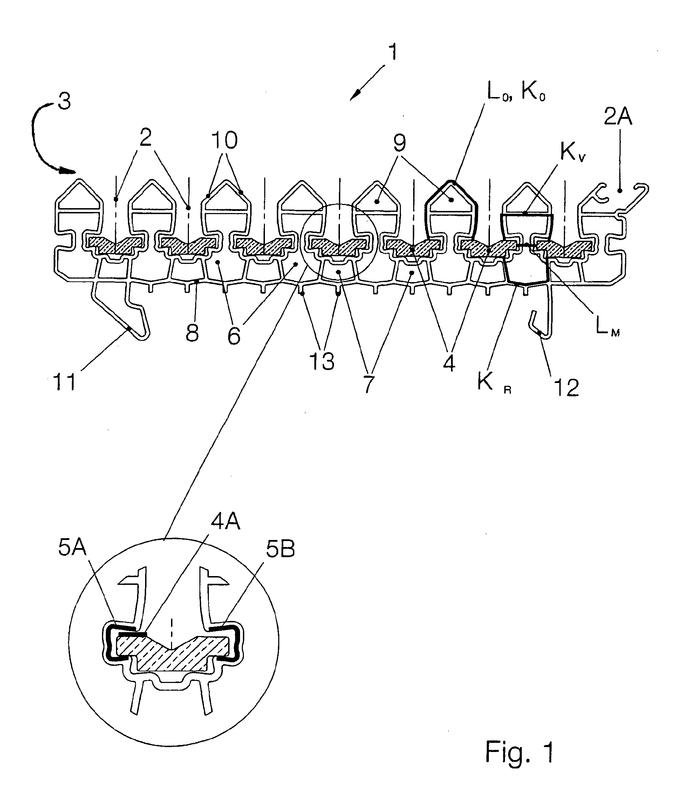

Wie aus Fig. 1 zu ersehen ist, weist ein erfindungsgemäßes, als einstückiges Bauteil ausgeführtes, durch Extrusion aus Kunststoff hergestelltes Isolierprofil 1 im Querschnitt eine regelmäßige Anordnung von mehreren Kammern auf, die sich in Längsrichtung des Profils, d.h. senkrecht zur Zeichenebene von Fig. 1 erstrecken. Eine Gruppe von Kammern 2 ist im Querschnitt nach einer Seite hin offen und definiert dadurch eine offene, in Fig. 1 oben befindliche Vorderseite 3 des Isolierprofils 1. Die Kammern 2 dieser offenen Gruppe weisen jeweils zwei zur formschlüssigen Halterung einer Stromschiene 4 geeignete Hinterschneidungen 5A und 5B auf. Wandabschnitte mehrerer nebeneinander liegender geschlossener Kammern 6 und 7 bilden zusammen eine der offenen Vorderseite 3 des Isolierprofils gegenüberliegende, in Fig. 1 unten befindliche Rückwand 8 des Isolierprofils 1.

Mit den hier im Zusammenhang mit einer Gruppe von Kammern verwendeten Begriffen "offen" und "geschlossen" ist nicht eine Eigenschaft der Gruppierung, sondern eine Eigenschaft jeder einzelnen der zu der Gruppe gehörenden Kammern gemeint. Der Begriff "Gruppe" soll hierbei zum Ausdruck bringen, dass alle zu einer Gruppe gehörigen Kammern die gleiche Querschnittsform haben. Die in Fig. 1 gezeigte Lage des Isolierprofils 1 ist nicht notwendigerweise seine Einbaulage an einem Einsatzort, denn diese ist typischerweise hochkant, also gegenüber der Darstellung von Fig. 1 um ± 90° gedreht. Sie könnte aber auch um 180° gedreht sein. Soweit hier Begriffe wie "oben" und "unten" verwendet werden, die vertikale Anordnungen kennzeichnen, beziehen sich diese lediglich auf die Lage des Isolierprofils 1 in Fig. 1.

Die Kammern 6 einer ersten geschlossenen Gruppe erstrecken sich von der Rückwand 8 des Profils 1 aus in Richtung der offenen Vorderseite 3 des Profils 1 bis über die Hinterschneidungen 5A, 5B der Kammern 2 der offenen Gruppe und damit über die vorgesehene Position der vorderen Oberflächen 4A der Stromschienen 4 hinaus. Jeweils eine Kammer 6 dieser ersten geschlossenen Gruppe ist zwischen zwei benachbarten Kammern 2 der offenen Gruppe angeordnet. Durch die Hinderschneidungen 5A, 5B ergibt sich für die Kammern 6 der ersten geschlossenen Gruppe jeweils eine Einengung ihrer Breite im mittleren Bereich. Zwischen zwei benachbarten Klammern 6 der ersten geschlossenen Gruppe ist unterhalb der dazwischen liegenden Kammer 2 der offenen Gruppe jeweils eine Kammer 7 einer anderen geschlossenen Gruppe angeordnet. An der offenen Vorderseite 3 des Isolierprofils 1 ist zwischen zwei benachbarten Kammern 2 der offenen Gruppe jeweils eine Kammer 9 einer weiteren geschlossenen Gruppe angeordnet, die jeweils an eine Kammer 6 der ersten geschlossenen Gruppe angrenzt, und zwar an deren oberem, d.h. vorderem Ende. Die der Vorderseite 3 des Profils 1 zugewandte Außenwand 10 einer Kammer 9 hat im Querschnitt eine vorspringende Form, bei dem in Fig. 1 gezeigten Beispiel im wesentlichen die eines Satteldachs.

Diese Form der vorderen Außenwand 10 der oberen geschlossenen Kammer 9 hat den Vorteil, dass ein Stromabnehmer während einer Bewegung in die offene Kammer 2 hinein zur Kontaktierung einer Stromschiene 4 im Falle einer geringfügigen seitlichen Fehlpositionierung selbsttätig in die richtige Richtung, d.h. zur Mitte der offenen Kammer 2 hin abgelenkt wird. Es versteht sich, dass die Dachform der Außenwand 10 in dem gezeigten Ausführungsbeispiel nur eine von mehreren möglichen Ausgestaltungen des zugrundeliegenden Prinzips ist. Hierbei kommt es nur darauf an, dass die Außenwand 10 zwischen den vorderseitigen Öffnungen zweier benachbarter offener Klammern 2 eine allgemein vorspringende und zur Mitte der jeweils nächstliegenden offenen Kammer 2 hin monoton geneigte Form hat.

Die Form der Außenwand 10 kann insgesamt rund oder abschnittsweise eben sein, wie es bei der Dachform des gezeigten Ausführungsbeispiels der Fall ist. Wesentlich ist nur, dass die Außenwand 10 zwischen den vorderseitigen Öffnungen zweier benachbarter offener Kammern 2 mit zunehmender seitlicher Entfernung von der Mitte einer offenen Kammer 2 auch monoton zunehmend nach vorne verläuft, d.h. ihre Oberfläche sich monoton zunehmend nach vorne von der vorgesehenen Position 4A der Stromschiene 4 entfernt. Es spielt keine Rolle, ob dies in Form eines runden oder abschnittsweise ebenen Verlaufs geschieht und ob der Gradient der Oberfläche mit zunehmender Entfernung von der vorgesehenen Position 4A der Stromschiene 4 ab- oder zunimmt, also eine konvexe oder eine konkave Grundform der Trichteröffnung der offenen Kammer 2 vorliegt. Logischerweise erreicht die Oberfläche der Außenwand 10 ihre vorderste Stelle genau in der Mitte zwischen zwei offenen Kammern 2, wo eine Singularität in Form eines Ortes gleicher Entfernung von beiden benachbarten offenen Kammern 2 vorliegt.

Die durch die Formgebung der Außenwand 10 bewirkte trichterförmige Erweiterung der Öffnungen der offenen Kammern 2 an der Vorderseite des Isolierprofils 1 könnte im Grundsatz auch auf ein Isolierprofil für eine einpolige Schleifleitung angewendet werden. In diesem Sonderfall würde das Isolierprofil an derjenigen Stelle, an der bei dem hier gezeigten Ausführungsbeispiel die Mitte zwischen zwei benachbarten offenen Kammern 2 liegt, bereits in seitlicher Richtung enden und durch eine vertikale Seitenwand abgeschlossen sein. Die Wirkung der selbsttätigen Ablenkung eines geringfügig fehlpositionierten Stromabnehmers in die offene Kammer 2 mit der Stromschiene 4 hinein wäre auch in diesem Sonderfall einer einpoligen Schleifleitung gegeben.

Wie aus der Querschnittsansicht von Fig. 1 unmittelbar ersichtlich ist, verläuft entlang eines Isolierprofils 1 die kürzeste Verbindung zwischen zwei benachbarten Stromschienen 4 sowohl im freien Raum, als auch auf der Oberfläche eines Isolators jeweils auf der vorderseitigen Oberfläche des Isolierprofils 1, d.h. die Längen W₀ und K₀ der sogenannten Luft- und Kriechstrecken sind gleich lang und durch die Querschnittsform der den offenen Kammern 2 zugewandten Wandabschnitte der geschlossenen Kammern 6 sowie der Außenwände 10 der geschlossenen Kammern 9 vorgegeben. In Fig. 1 sind die in diesem Fall zusammenfallenden Luft- und Kriechstrecken L₀ und K₀ an einer Kammer 6 und der zugehörigen Kammer 9 durch eine dicke Linie entlang besagter Wandabschnitte bzw. Außenwände gekennzeichnet.

An einem stirnseitigen Ende eines Isolierprofils 1 ist dessen Isolationswirkung jedoch unterbrochen, so dass dort, wenn nicht zusätzlichen Maßnahmen getroffen würden, die Luftstrecke L_{M} einfach durch den kürzesten Abstand zwischen zwei benachbarten Stromschienen 4 gegeben wäre. Diese Luftstrecke L_{M}, die wesentlich kürzer ist als die entlang des Profils 1 wirksame Luftstrecke L₀, ist in Fig. 1 an einer Stelle durch eine kurze dicke Linie gekennzeichnet.

Für die Kriechstrecke ist hier die Querschnittform der zwischen den Stromschienen 4 liegenden Kammern 6 maßgeblich, da nun ein Kriechstrom auf der Stirnfläche des Profils 1 entlang der stirnseitigen Endflächen der Wände der Kammern 6 fließen kann. Für einen solchen Kriechstrom bieten die Wände der Kammern 6 zwei Pfade, nämlich einen über die Vorderseite 3 des Profils 1 und einen über die Rückseite des Profils 1. Die jeweiligen Kriechstrecken Kv und K_{R} sind in Fig. 1 ebenfalls als dicke Linien eingetragen. Während die Kriechstrecke K_{R} über die Rückwand 8 des Profils 1 verläuft, ist für die Kriechstrecke K_{V} jeweils die Trennwand zwischen einer Kammer 6 und angrenzenden Kammer 9 maßgeblich. Diese Trennwand trägt zur mechanischen Stabilität bei und ist hinsichtlich der Länge der wirksamen Kriechstrecke unschädlich, da die Längen der beiden Kriechstrecken Kv und K_{R} bei dem in Fig. 1 gezeigten Ausführungsbeispiel etwa gleich sind. Ein Weglassen besagter Trennwand würde zwar die Kriechstrecke Kv, nicht jedoch die insgesamt wirksame Kriechstrecke verlängern, da letztere durch die kürzere der beiden Kriechstrecken K_{V} und K_{R} bestimmt wird.

Wie Fig. 1 erkennen läßt, sorgt die Erstreckung der Kammern 6 über einen großen Teil der Höhe des Profils 1, d.h. von der Rückwand 8 bis deutlich über die Hinterschneidungen 5A, 5B hinaus nach vorne für einen relativ großen Wert der Längen der Kriechstrecken Kv und K_{R}. Um bei einer geringeren Erstreckung der Kammern 6 in der Höhe die gleiche Kriechstreckenlänge zu erzielen, müßte die seitliche Ausdehnung der Kammern 6 größer sein, was insgesamt zu einer Verbreiterung des Profils 1 führen würde. Dies würde dem Ziel einer möglichst kompakten Bauweise, wie es bei modernen Schleifleitungen verfolgt wird, zuwiderlaufen. Die erfindungsgemäße Gestaltung der Kammern 6 erlaubt es also, eine kompakte Bauweise einer Schleifleitung mit der Einhaltung vorschriftsmäßiger Mindestlängen der Kriechstrecken an den stirnseitigen Verbindungsstellen der einzelnen Isolierprofile 1, die unvermeidbar zum Aufbau einer Schleifleitung üblicher Länge gehören, in Einklang zu bringen.

Die rückseitige Kriechstrecke K_{R} ließe sich zwar durch den Verzicht auf die Ausbildung der hinter den Stromschienen 4 liegenden Kammern 7, d.h. durch ein direktes Angrenzen benachbarter Kammern 6 aneinander hinter einer Stromschiene noch verlängern, doch würde dies die Stabilität des Profils 1 beeinträchtigen, da jede Stromschiene 4 in diesem Fall nur noch durch eine einzige Kammertrennwand abgestützt würde. Außerdem würde die insgesamt wirksame Kriechstreckenlänge dadurch nicht verlängert werden, denn diese würde dann durch die vorderseitige Kriechstrecke Kv bestimmt.

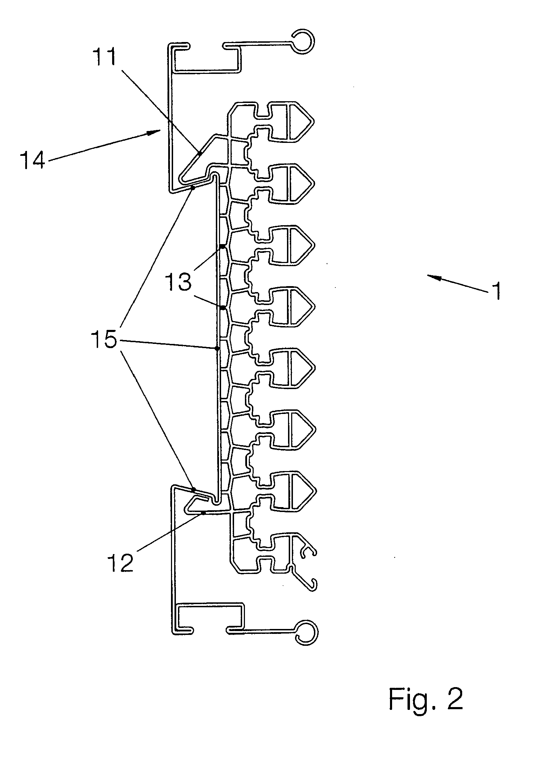

In Fig. 1 sind noch zwei einstückig an die Rückwand 8 angeformte, im wesentlichen hakenförmige Befestigungselemente 11 und 12, sowie von der Rückwand 8 senkrecht abstehende Rippen 13 erkennbar. Diese Elemente dienen der Befestigung des Isolierprofils 1 an einem Trägerprofil 14, welche in Fig. 2 dargestellt ist. Wie Fig. 2 zeigt, hat das Trägerprofil 14 in seinem mittleren Abschnitt 15 eine zu der Rückseite des Isolierprofils 1 komplementäre Form, so dass das Isolierprofil 1 mit Hilfe der Befestigungselemente 11 und 12 auf den mittleren Abschnitt 15 des Trägerprofil 14 aufgeschnappt werden kann und dann formschlüssig mit diesem verbunden ist. Dabei stützen die Rippen 13 die Rückwand 8 des Isolierprofils 1 auf dem Trägerprofil 14 ab.

Ferner ist in Fig. 1 am rechten Rand des Isolierprofils 1 eine zur Vorderseite hin offene Kammer 2A zu sehen, deren Form von derjenigen der zur Aufnahme der Stromschienen 4 vorgesehenen offenen Kammern 2 deutlich abweicht. Diese Kammer 2A ist dazu vorgesehen, eine Datenleitung aufzunehmen, die entlang der Schleifleitung verläuft und eine Kommunikation, insbesondere durch berührungslose induktive Datenübertragung, eines durch die Schleifleitung mit elektrischer Energie versorgten Fahrzeugs mit einer zentralen Steuereinrichtung und/oder mit anderen sich entlang derselben Schleifleitung bewegenden Fahrzeugen ermöglichen soll. Dadurch entfällt die Notwendigkeit einer eigenen Halterung zur Verlegung einer solchen Datenleitung.

Alternativ oder zusätzlich zu einer Datenleitung kann in der randseitigen Kammer 2A auch ein mit Positionsinformation beschriebener Datenträger angeordnet sein, anhand dessen ein sich entlang der Schleifleitung bewegendes Fahrzeug mittels eines entsprechenden Lesegerätes laufend oder zumindest an vorbestimmten Orten seine eigene Position ermitteln kann. Diese Positionsinformation kann dann zur Steuerung der Bewegung des Fahrzeugs verwendet werden.

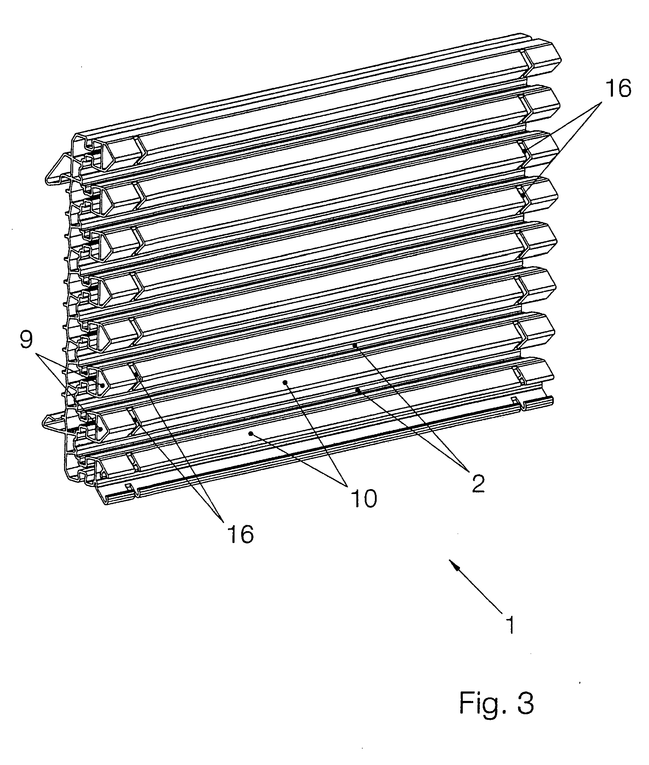

Eine perspektivische Ansicht eines erfindungsgemäßen Isolierprofils 1 zeigt Fig. 3. Dabei ist die Länge im Verhältnis zur Breite nicht maßstäblich, sondern stark verkürzt dargestellt. Erkennbar sind in der Ansicht von Fig. 3 insbesondere Öffnungen 16 in den konvexen Außenwänden 10 der Kammern 9 nahe den beiden Enden des Isolierprofils 1, d.h. in einem vorbestimmten Abstand von dessen Stirnseiten. Diese Öffnungen 16 haben alle dieselbe Form, d.h. eine überall gleiche Länge in Längsrichtung des Profils 1 sowie eine überall gleiche Weite quer zur Länge. Bei dem gezeigten Ausführungsbeispiel, bei dem die Außenwände 10 jeweils im wesentlichen die Form eines Satteldachs haben, erstreckt sich die Weite einer Öffnung 16 jeweils nahezu über die gesamte Breite einer Kammer 9.

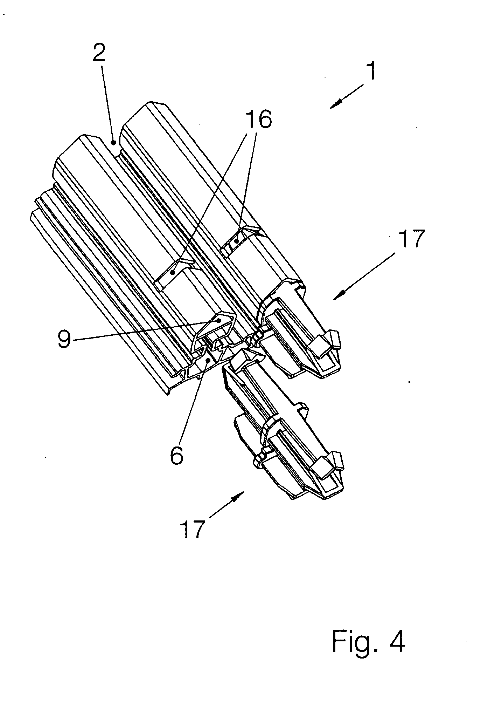

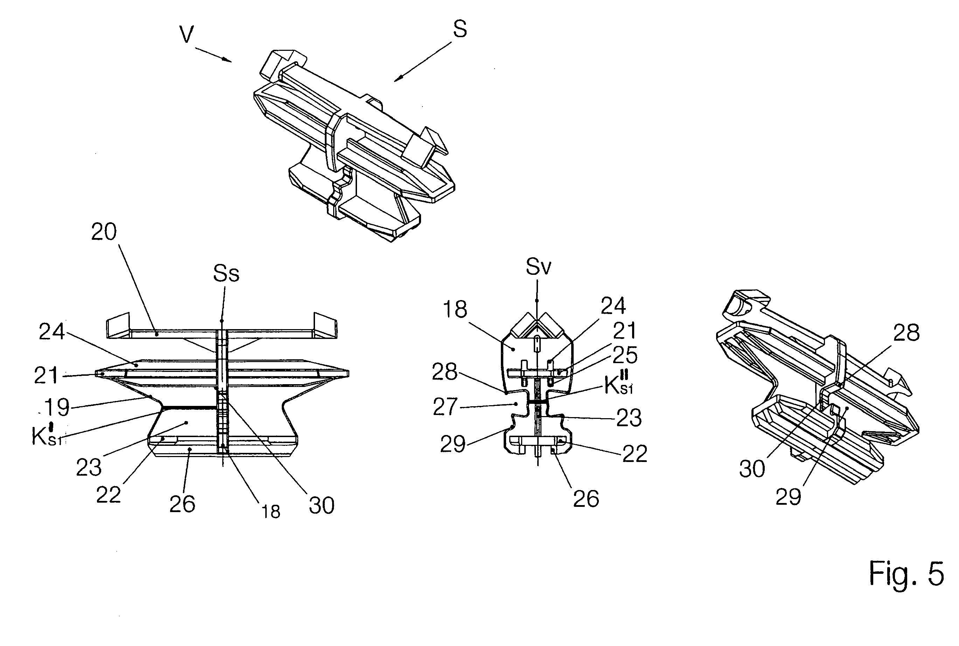

Die Öffnungen 16 dienen zur formschlüssigen stirnseitigen Verbindung mehrerer Isolierprofile 1 miteinander unter Verwendung geeigneter Verbindungselemente, die im weiteren anhand der Figuren 4 und 5 erläutert werden wird. Der Vorteil dieser Form der Öffnungen 16 besteht darin, dass alle Öffnungen 16 nahe jeweils einem der beiden Enden des Profils 1 äußerst rationell durch einen einzigen Sägeschnitt in Querrichtung hergestellt werden können, wobei sich die Länge der Öffnungen 16 in Längsrichtung des Profils 1 aus der Breite des Sägeblattes und die Weite in Querrichtung bei einer gegebenen vorspringenden Form der Außenwand 10 einer Kammer 9 aus der Tiefe des Sägeschnittes ergibt. Eine serielle Bearbeitung zur Herstellung jeder einzelnen Öffnung 16 ist somit nicht erforderlich. Es versteht sich, dass eine vorspringende Formgebung der zwischen den offenen Kammern 2 liegenden vorderseitigen Wandabschnitte 10 des Profils 1, die durch die Außenwände 10 der Kammern 9 gebildet werden, die Voraussetzung für die Möglichkeit darstellt, die Öffnungen 16 auf eine solche Weise herzustellen.

Wie zuvor erläutert, sorgt die erfindungsgemäße Formgebung der Kammern 6 bereits allein für eine ausreichende Kriechstreckenlänge an einer Verbindungsstelle zweier Isolierprofile 1. Die Schaffung einer Luftstrecke vorschriftsmäßiger Länge erfordert noch die Einfügung eines isolierenden Elements in die Kammern 6 an den Verbindungsstellen, um die dort zunächst viel zu kurze Luftstrecke L_{M}, wie sie in Fig. 1 markiert ist, zu unterbrechen. Diese Maßnahme ist in Fig. 4 anhand eines Ausschnitts des erfindungsgemäßen Isolierprofils 1 dargestellt. Der Ausschnitt zeigt links unten ein Verbindungselement 17, welches aus einem isolierenden Werkstoff besteht, vor einer geschlossenen Kammer 6 in einer Ausrichtung, in der es durch eine lineare Verschiebung in die Kammer 6 eingesteckt werden kann, wobei gleichzeitig auch ein Teil des Verbindungselements 17 in die darüber liegende Kammer 9 gelangt. Rechts unten ist ein weiteres, identisches Verbindungselement 17 zu sehen, das bereits vollständig, d.h. so weit wie möglich, in die Kammer 6 eingesteckt ist.

Das Verbindungselement 17 ist in Fig. 5 in vier Ansichten, nämlich oben links in einer perspektivischen Ansicht von oben, in der Mitte links in einer Seitenansicht, in der Mitte rechts in einer Vorderansicht, und unten rechts in einer perspektivischen Ansicht von unten dargestellt. In der perspektivischen Ansicht links oben sind die Richtungen der Seitenansicht und der Vorderansicht jeweils durch mit S bzw. mit V gekennzeichnete Pfeile angedeutet. In der Seiten- und Vorderansicht ist jeweils eine Symmetrielinie S_{S} bzw. S_{V}, die eine senkrecht zur Zeichenebene verlaufende Symmetrieebene markiert, gestrichelt eingezeichnet.

Das Verbindungselement 17 besteht aus einer Grundplatte 18, zwei von der Grundplatte 18 symmetrisch zu deren Mittelebene senkrecht abragenden Steckern 19, sowie zwei von der Grundplatte ebenfalls symmetrisch zu deren Mittelebene senkrecht abragenden Schnapphaken 20. Der Übersichtlichkeit halber ist in der Seitenansicht nur eine der beiden symmetrischen Hälften mit Bezugszahlen versehen. Die Außenkontur des Steckers 19 ist an die Innenkontur der Kammer 6 so angepaßt, dass der Stecker 19 an einem stirnseitigen Ende des Isolierprofils 1 spielarm oder spielfrei in die Kammer 6 einsteckbar ist. Wie insbesondere an den perspektivischen Darstellungen und an der Vorderansicht zu erkennen ist, hat der Stecker 19 von vorne gesehen einen oberen und einen unteren Quersteg 21 bzw. 22 und zwischen diesen beiden einen Hauptsteg 23, so dass er in der Vorderansicht etwa die Grundform des Großbuchstabens I aufweist. Diese Form korrespondiert mit der Querschnittsform der Kammer 6, wobei der Hauptsteg 23 der mittigen Einengung der Kammer 6 durch die Hinterschneidungen 5A, 5B der benachbarten offenen Kammern 2 zugeordnet ist, während die beiden Querstege 21 und 22 den beiden breiteren Bereichen der Kammer 6 über bzw. unter besagter mittiger Einengung zugeordnet sind.

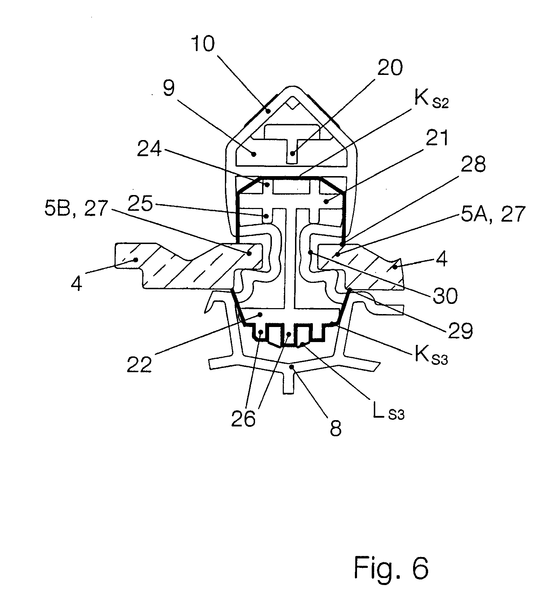

Die Außenkontur des Querschnitts des Steckers 19 muß nicht exakt der Innenkontur einer Kammer 6 entsprechen, sondern es kommt nur darauf an, dass der Stecker 19 nach dem Einstecken in eine Kammer 6 ausreichend genau in dieser positioniert ist, um eine Isolationswirkung zwischen zwei benachbarten Stromschienen 4 zu erzielen, die nachfolgend noch erläutert werden wird. In dem gezeigten Ausführungsbeispiel ist die Breite der Querstege 21 und 22 so bemessen, dass diese nach dem Einstecken des Steckers 19 in eine Kammer 6 seitlich an der Wand der Kammer 6 anliegen und so für eine Fixierung des Steckers 19 in seitlicher Richtung sorgen. Dies ist in Fig. 6 deutlich erkennbar, die eine Querschnittsansicht eines vergrößerten Ausschnitts des Isolierprofils von Fig. 1, nämlich jeweils eine Kammer 6 und eine Kammer 9 mit einem in der Kammer 6 befindlichen Stecker 19 eines Verbindungselements 17 zeigt. Zwischen dem Stecker 19 und der Wand der Kammer 6 kann dabei noch ein geringes Spiel vorhanden sein.

Außerdem ragen von dem oberen Quersteg 21 jeweils zwei obere und untere Rippen 24 bzw. 25 senkrecht ab. Diese sind so bemessen, dass sie an der Trennwand zwischen der Kammer 6 und der angrenzenden Kammer 9 bzw. an denjenigen Wandabschnitten der Kammer 6, welche die Oberseiten der Hinterschneidungen 5A, 5B bilden sind, anliegen Hierdurch sorgen sie für eine Fixierung des Steckers 19 in vertikaler Richtung, wobei auch hier noch ein geringes Spiel vorhanden sein kann.. Weitere drei Rippen 26 ragen senkrecht von dem unteren Quersteg 22 nach unten ab. Diese liegen jedoch nach dem Einstecken des Steckers 19 in eine Kammer 6 nicht an deren Wand an, da dies zur Fixierung des Steckers 19 nicht mehr nötig ist und nur eine Verspannung desselben zur Folge hätte. Die Funktion der Rippen 26 wird später noch erläutert werden.

Wie insbesondere aus den beiden perspektivischen Darstellungen in Fig. 5 ersichtlich ist, sind die Endbereiche des Steckers 19 abgeschrägt, und zwar sowohl an den Querstegen 21 und 22, als auch an den Rippen 24, 25 und 26. Diese Maßnahme dient dazu, das Einführen des Steckers 19 in eine Kammer 6 zu erleichtern.

Die Außenkontur der Grundplatte 18 in der Vorderansicht V entspricht teilweise der gemeinsamen Außenkontur des Querschnitts der Kammern 6 und 9 einschließlich der Wände, und zwar im Bereich der offenen Vorderseite des Isolierprofils 1 bis zu den Hinterschneidungen 5A, 5B der benachbarten offenen Kammern 2, denen entsprechende Ausschnitte 27 in der Grundplatte 18 zugeordnet sind. Abweichungen bestehen im vorderseitigen Endbereich des Isolierprofils 1, d.h. der vorspringenden Wandabschnitte 10, sowie in dem der Rückwand 8 zugewandten Bereich der Kammer 6.

Beim Einstecken eines Steckers 19 in ein Isolierprofil 1 kommt die Grundplatte 18 zum Anliegen an den Stirnflächen der Wände der Kammern 6 und 9 und bildet auf diese Weise einen Anschlag, der die Einstecktiefe begrenzt. Andererseits ragt die Grundplatte 18 nirgendwo seitlich über die Wände der Kammern 6 und 9 hinaus, also nicht in die Querschnitte der benachbarten offenen Kammern 2 oberhalb der Stromschienen 4 hinein, so dass diese Querschnitte, in denen sich die Stromabnehmer bewegen, durch das Einstecken eines Verbindungselements 17 nicht verändert werden und die Bewegung der Stromabnehmer nicht gestört wird.

Beim Einstecken eines Steckers 19 in eine Kammer 6 eines Isolierprofils 1 wird gleichzeitig ein Schnapphaken 20 des Verbindungselements 17 in die angrenzende Kammer 9 des Isolierprofils 1 eingeschoben. Die Länge der Schnapphaken 20 eines Verbindungselements 17 ist so bemessen, dass ein Schnapphaken 20 nach dem vollständigen Einstecken eines Steckers 19, d.h. beim Anschlagen der Grundplatte 18 an der Stirnfläche des Profils 1, in formschlüssigen Eingriff mit der Öffnung 16 in dem konvexen Wandabschnitt 10 der Kammer 9 gelangt, d.h. in diese Öffnung 16 einschnappt. Hierdurch wird das Verbindungselement 17 zuverlässig an dem Profil 1 fixiert.

Durch das Einfügen je eines Verbindungselements 17 in sämtliche Kammern 6 und 9 an der Stirnseite eines ersten Isolierprofils 1 und das anschließende Aufstecken eines zweiten Isolierprofils 1 auf die in das erste Isolierprofil 1 eingefügten Verbindungselemente 17 können die beiden Isolierprofile 1 fest miteinander verbunden werden, und zwar so, dass sie in Längsrichtung miteinander fluchten und eine ungehinderte lineare Bewegung von Stromabnehmern in den offenen Kammern 2 über die Verbindungsstelle hinweg gewährleistet ist. Durch aufeinanderfolgendes Verbinden mehrerer Isolierprofile 1 unter Verwendung jeweils einer Reihe von Verbindungselementen 17 und anschließendes Einziehen von Stromschienen in die offenen Kammern 2 kann eine kompakte mehrpolige Schleifleitung beliebiger Länge hergestellt werden.

Es leuchtet ein, dass durch das Einfügen der Verbindungselemente 17 die zu kurze Luftstrecke L_{M} (Fig. 1) an der Verbindungsstelle zwischen zwei Isolierprofile 1 unterbrochen wird. Die Länge der Luft und Kriechstrecken an der Verbindungsstelle wird nun durch die Form der Verbindungselemente 17 bestimmt. Unter der Annahme, dass ein Verbindungselement 17 ungünstigstenfalls mit den Rändern der Ausschnitte 27 seiner Grundplatte 18 zwei benachbarte Stromschienen berühren kann, gibt es drei mögliche Kriechpfade zwischen zwei benachbarten Stromschienen auf der Oberfläche eines Verbindungselements 17.

Ein erster Kriechpfad K_{S1} verläuft unmittelbar auf Höhe der Stromschienen 4, d.h. an dem Verbindungselement 17 auf Höhe der Ausschnitte 27 seiner Grundplatte 18 von der inneren Kante 30 eines Ausschnitts 27 auf der Grundplatte 18 zu dem Stecker 19, dann geradlinig in Längsrichtung des Steckers 19 an dessen Hauptsteg 23 bis zu dessen Ende, um dieses herum, auf der anderen Seite des Hauptstegs 23 zurück bis zur Grundplatte 18 und schließlich auf dieser bis zur inneren Kante 30 des gegenüberliegenden Ausschnitts 27. Teile dieses Kriechpfades sind in Fig. 5 eingezeichnet und hierbei in der Seitenansicht als K_{S1}' und in der Vorderansicht als K_{S1}" markiert, wobei K _{S1}" die gesamte Länge des in der Vorderansicht sichtbaren Teils bezeichnet. Für die Länge des Kriechpfades K_{S1} gilt: K_{S1} = 2·K_{S1}' + K_{S1}".

Die Verläufe des zweiten und des dritten Kriechpfades K_{S2} und K_{S3} sind anhand der Querschnittsansicht von Fig. 6 ersichtlich und dort durch dicke Linien markiert. Es existiert ein oberer Kriechpfad K_{S2}, der von der Oberseite einer Stromschiene 4 im Bereich 28 einer oberen Ecke des Ausschnitts 27 der Grundplatte 18 ausgeht. Auf dieser führt er etwa vertikal bis zum Ende des oberen Querstegs 21, dann schräg bis zum Ende der ersten oberen Rippe 24, dann horizontal bis zum Ende der zweiten oberen Rippe 24, wieder schräg bis zum entgegengesetzten Ende des oberen Querstegs 21 und schließlich wieder etwa vertikal bis zur oberen Ecke des gegenüberliegenden Ausschnitts 27 und in diesem Bereich zur dortigen Stromschiene 4.

Ferner existiert ein unterer Kriechpfad K_{S3}, der von einer unteren Ecke 29 des Ausschnitts 27 der Grundplatte 18 ausgeht. Auf dieser führt er ungefähr vertikal bis zum Ende des unteren Querstegs 22, schräg bis zum Ende der ersten unteren Rippe 26, dann zur Unterseite des unteren Querstegs 22, dort um die mittlere untere Rippe 26 herum, weiter bis zum unteren Ende der dritten unteren Rippe 26, von dort wieder schräg auf der Grundplatte 18 bis zum entgegengesetzten Ende des unteren Querstegs 22 und schließlich wieder ungefähr vertikal bis zu einer unteren Ecke des gegenüberliegenden Ausschnitts 27.

Da die Grundplatte 18 nach unten nicht über den unteren Quersteg 22 hinausreicht, sondern nur von außen an die beiden äußeren der unteren Rippen 26 heranreicht, folgt der untere Kriechpfad K_{S3} an der Unterseite des unteren Querstegs 22 zwischen den beiden äußeren der unteren Rippen 26 exakt dem Querschnitt der unteren Oberfläche des Steckers 19. Dies ist auf der Oberseite des oberen Querstegs 21 nicht der Fall, da hier die Grundplatte 18 deutlich über den oberen Quersteg 21 einschließlich der oberen Rippen 24 hinausreicht. Deshalb verläuft der Kriechpfad K_{S2} dort zwischen den Enden der beiden oberen Rippen 24 geradlinig, nämlich auf der Grundplatte 18.

Die Länge der Kriechstrecke auf der Oberfläche eines Verbindungselements 17 ist die Länge des kürzesten der drei Pfade K_{S1}, K_{S2} und K_{S3}. Dieser ist dann noch mit den Längen der Kriechpfade K_{V} und K_{R} (Fig. 1) auf der Stirnfläche des Isolierprofils 1 zu vergleichen, wobei wiederum der kürzeste aller Pfade das endgültige Maß für die Länge der insgesamt wirksamen Kriechstrecke ist, welche die einschlägigen Sicherheitsvorschriften erfüllen muß.

Die beiden Kriechpfade K_{S1} und K_{S2} fallen jeweils mit entsprechenden Luftwegen L_{S1} bzw. L_{S2} zusammen, da sie entlang ihres jeweiligen Verlaufs auch den jeweils kürzestmöglichen Weg im freien Raum zwischen zwei benachbarten Stromschienen 4 um das Verbindungselement 17 herum darstellen. Zu vergleichen sind diese beiden Luftwege L_{S1}=Ks, und L_{S2}=K_{S2} mit einem dritten Luftweg L_{S3}, der ungefähr dem Kriechpfad K_{S3} entspricht, jedoch an der Unterseite des unteren Querstegs 22 etwas kürzer ist als dieser, da er dort direkt zwischen den unteren Enden der drei unteren Rippen 26 verläuft und keine Schleifen zurück zur Unterseite des unteren Querstegs 22 beinhaltet. Die kleinste der Längen der drei Luftwege L_{S1}, L_{S2} und L_{S3} ist das endgültige Maß für die Länge der insgesamt wirksamen Luftstrecke, welche die einschlägigen Sicherheitsvorschriften erfüllen muß. Es ist unmittelbar ersichtlich, dass diese Luftstrecke wesentlich länger ist als die ohne Vorhandensein des Verbindungselements 17 vorhandene, in Fig. 1 eingetragene Luftstrecke L_{M}.

Aus der vorausgehenden Beschreibung eines Ausführungsbeispiels ergeben sich für den Fachmann eine Vielzahl von Variationsmöglichkeiten in der Gestaltung des Querschnitts des Isolierprofils 1. Beispielsweise ist die Formgebung der Hinterschneidungen 5A und 5B und der korrespondierenden Ausschnitte 27 der Grundplatte 18 des Verbindungselements 17 eine Frage der Anpassung an die Form und die Abmessungen der verwendeten Stromschienen 4. Ferner brauchen die konvexen Wandabschnitte 10 der oberen geschlossenen Kammern 9 nicht dachförmig zu sein, sondern sie könnten auch eine runde Form haben. Solche und vergleichbare Modifikationen liegen im Ermessen des Fachmannes und sollen vom Schutz der Patentansprüche umfasst sein.

## Patentansprüche

1. Isolierprofil (1) für eine mehrpolige Schleifleitung, welches eine regelmäßige Anordnung einer Gruppe von mehreren sich in Längsrichtung des Profils (1) erstreckenden Kammern (2) aufweist, die im Querschnitt nach einer Seite hin offen sind und dadurch eine offene Vorderseite des Isolierprofils (1) definieren, und die zur Halterung jeweils einer Stromschiene (4) geeignet sind, **dadurch gekennzeichnet, dass** sich die Öffnung einer offenen Kammer (2) an der Vorderseite des Isolierprofils (1) dergestalt in seitlicher Richtung erweitert, dass die Oberfläche der Vorderseite des Isolierprofils (1) an jeder Stelle zur Mitte der jeweils nächstliegenden offenen Kammer (2) hin geneigt ist, und dass die zwischen den Öffnungen der offenen Kammern (2) befindlichen Wandabschnitte (10) an der Vorderseite des Isolierprofils (1) nahe jeder der beiden Stirnseiten des Isolierprofils (1) jeweils eine Öffnung (16) in einem vorbestimmten Abstand von der jeweiligen Stirnseite des Isolierprofils (1) aufweisen.

2. Isolierprofil nach Anspruch 1, **dadurch gekennzeichnet, dass** die Öffnungen (16) in den zwischen den Öffnungen der offenen Kammern (2) befindlichen Wandabschnitten (10) an der Vorderseite des Isolierprofils (1) eine Form aufweisen, die durch jeweils einen einzigen Sägeschnitt in Querrichtung des Isolierprofils (1) nahe jeder Stirnseite desselben erzeugbar ist.

3. Isolierprofil nach Anspruch 1 oder 2, **dadurch gekennzeichnet, dass** es eine regelmäßige Anordnung von mehreren sich in Längsrichtung des Profils erstreckenden Kammern aufweist, wobei mindestens eine Gruppe von Kammern vorhanden ist, die im Querschnitt geschlossen sind, und wobei Wandabschnitte mehrerer nebeneinander liegender geschlossener Kammern zusammen eine der offenen Vorderseite des Isolierprofils gegenüberliegende Rückwand des Isolierprofils bilden, sich die geschlossenen Kammern (6) einer ersten Gruppe von der Rückwand (8) des Profils (1) aus in Richtung zur offenen Vorderseite des Profils (1) bis über die vorgesehene Position der vorderen Oberflächen (4A) der Stromschienen (4) in den offenen Kammern (2) hinaus erstrecken, und dass jeweils mindestens eine geschlossene Kammer (6) dieser ersten Gruppe zwischen zwei benachbarten offenen Kammern (2) angeordnet ist.

4. Isolierprofil nach Anspruch 3, **dadurch gekennzeichnet, dass** zwischen zwei benachbarten geschlossenen Kammern (6) der ersten Gruppe jeweils eine geschlossene Kammer (7) einer anderen Gruppe angeordnet ist, und dass Wandabschnitte von geschlossenen Kammern (6, 7) der ersten und der anderen Gruppe zusammen die Rückwand (8) des Profils (1) bilden.

5. Isolierprofil nach Anspruch 3 oder 4, **dadurch gekennzeichnet, dass** an der offenen Vorderseite des Isolierprofils (1) zwischen zwei benachbarten offenen Kammern (2) jeweils eine geschlossene Kammer (9) einer weiteren Gruppe angeordnet ist, und dass diese jeweils an eine geschlossene Kammer (6) der ersten Gruppe angrenzt.

6. Isolierprofil nach einem der Ansprüche 3 bis 5, **dadurch gekennzeichnet, dass** seine stirnseitigen Endflächen plan sind.

7. Isolierprofil nach einem der Ansprüche 3 bis 6 **dadurch gekennzeichnet, dass** es an seinem Rand eine offene Kammer (2A) mit einer von den anderen offenen Kammern (2) abweichenden Form, die zur formschlüssigen Halterung einer entlang der Schleifleitung verlaufenden Datenleitung und/oder eines mit Positionsinformation versehenen Datenträgers geeignet ist, aufweist.

8. Isolierprofil nach einem der Ansprüche 1 bis 7, **dadurch gekennzeichnet, dass** an seiner Rückwand (8) Befestigungselemente (11, 12) zur Befestigung an einem Trägerprofil (14) einstückig angeformt sind.

## Claims

1. Insulating profile (1) for a multi-pole contact line, which exhibits a regular arrangement of a group of a plurality of chambers (2) which extend in the longitudinal direction of the profile (1) and which in cross-section are open towards one side and thereby define an open front side of the insulating profile (1) and which are suitable for holding a conductor rail (4) in each case, **characterised in that** the opening of an open chamber (2) on the front side of the insulating profile (1) widens in a lateral direction in such a way that the surface of the front side of the insulating profile (1) at every point is inclined towards the middle of the next open chamber (2), and **in that** on the front side of the insulating profile (1) near each of the two ends of the insulating profile (1) the wall portions (10) located between the openings of the open chambers (2) each exhibit an opening (16) a predetermined distance from the respective end of the insulating profile (1).

2. Insulating profile according to claim 1, **characterised in that** on the front side of the insulating profile (1) the openings (16) in the wall portions (10) located between the openings of the open chambers (2) exhibit a shape which can be produced in each case by a single saw cut in the transverse direction of the insulating profile (1) near each end of the same.

3. Insulating profile according to claim 1 or 2, **characterised in that** it exhibits a regular arrangement of a plurality of chambers which extend in the longitudinal direction of the profile, wherein there is at least one group of chambers which are closed in cross-section and wherein wall portions of a plurality of closed chambers lying next to one another together form a rear wall of the insulating profile lying opposite the open front side of the insulating profile, and the closed chambers (6) of a first group run out from the rear wall (8) of the profile (1) in the direction of the open front side of the profile (1) to beyond the designated position of the front surfaces (4A) of the conductor rails (4) in the open chambers (2), and **in that** in each case at least one closed chamber (6) of this first group is arranged between two neighbouring open chambers (2).

4. Insulating profile according to claim 3, **characterised in that** arranged between two neighbouring closed chambers (6) of the first group there is in each case a closed chamber (7) of another group, and **in that** wall portions of closed chambers (6, 7) of the first and of the other group together form the rear wall (8) of the profile (1).

5. Insulating profile according to claim 3 or 4, **characterised in that** arranged on the open front side of the insulating profile (1) between two neighbouring open chambers (2) there is in each case a closed chamber (9) of a further group, and **in that** this in each case borders a closed chamber (6) of the first group.

6. Insulating profile according to one of claims 3 to 5, **characterised in that** its end faces on the ends are flat.

7. Insulating profile according to one of claims 3 to 6, **characterised in that** at its edge it exhibits an open chamber (2A) with a shape which is different from the other open chambers (2) and which is suitable for form-locking holding of a data line running along the contact line and/or of a data carrier provided with position information.

8. Insulating profile according to one of claims 1 to 7, **characterised in that** fastening elements (11, 12) are formed in one piece on its rear wall (8) for fastening to a carrier profile (14).

## Revendications

1. Profilé isolant (1) pour une ligne de contact multipolaire, lequel présente un agencement régulier d'un groupe de plusieurs compartiments (2) s'étendant dans la direction longitudinale du profil (1), qui sont ouverts dans la section transversale vers un côté et définissent de ce fait un côté avant ouvert du profilé isolant (1) et qui sont adaptés à la fixation de respectivement un rail électrique (4), **caractérisé en ce que** l'ouverture d'un compartiment (2) ouvert s'élargit au niveau du côté avant du profilé isolant (1) de telle manière que, dans la direction latérale, la surface du côté avant du profilé isolant (1) est inclinée au niveau de chaque emplacement en direction du centre du compartiment (2) ouvert le plus proche respectivement, et **en ce que** les sections de paroi (10) se trouvant entre les ouvertures des compartiments (2) ouverts présentent, au niveau du côté avant du profilé isolant (1), à proximité de chacun des deux côtés frontaux du profilé isolant (1), respectivement une ouverture (16) à une distance prédéterminée du côté frontal respectif du profilé isolant (1).

2. Profilé isolant selon la revendication 1, **caractérisé en ce que** les ouvertures (16) présentent, dans les sections de paroi (10) se trouvant entre les ouvertures des compartiments (2) ouverts, au niveau du côté avant du profilé isolant (1), une forme qui peut être produite par respectivement une seule découpe à la scie dans la direction transversale du profilé isolant (1) à proximité de chaque côté frontal de ce dernier.

3. Profilé isolant selon la revendication 1 ou 2, **caractérisé en ce que** ledit profilé isolant présente un agencement régulier de plusieurs compartiments s'étendant dans la direction longitudinale du profil, sachant qu'au moins un groupe de compartiments est présent, lesquels sont fermés dans la section transversale, et sachant que des sections de paroi de plusieurs compartiments fermés juxtaposées forment conjointement une paroi arrière du profilé isolant, faisant face au côté avant ouvert du profilé isolant, que les compartiments (6) fermés d'un premier groupe s'étendent depuis la paroi arrière (8) du profil (1) en direction du côté avant ouvert du profil (1) au-delà de la position prévue des surfaces avant (4A) des rails électriques (4) dans les compartiments (2) ouverts, et **en ce que** respectivement au moins un compartiment (6) fermé dudit premier groupe est disposé entre deux compartiments (2) ouverts adjacents.

4. Profilé isolant selon la revendication 3, **caractérisé en ce que** respectivement un compartiment (7) fermé d'un autre groupe est disposé entre deux compartiments (6) fermés adjacents du premier groupe, et **en ce que** des sections de paroi des compartiments (6, 7) fermés du premier groupe et de l'autre groupe forment conjointement la paroi arrière (8) du profil (1).

5. Profilé isolant selon la revendication 3 ou 4, **caractérisé en ce que** respectivement un compartiment (9) fermé d'un autre groupe est disposé au niveau du côté avant ouvert du profilé isolant (1), entre deux compartiments (2) ouverts adjacents, et **en ce que** ce dernier jouxte respectivement un compartiment (6) fermé du premier groupe.

6. Profilé isolant selon l'une quelconque des revendications 3 à 5, **caractérisé en ce que** ses surfaces d'extrémité côté frontal sont planes.

7. Profilé isolant selon l'une quelconque des revendications 3 à 6, **caractérisé en ce que** ledit profilé isolant présente au niveau de son bord un compartiment (2A) ouvert doté d'une forme différente de celle des autres compartiments (2) ouverts, laquelle forme est adaptée pour la fixation par complémentarité de forme d'une ligne de données s'étendant le long de la ligne de contact et/ou d'un support de données pourvu d'une information de position.

8. Profilé isolant selon l'une quelconque des revendications 1 à 7, **caractérisé en ce que** des éléments de fixation (11, 12) destinés à être fixés au niveau d'un profil de support (14) sont formés par moulage d'un seul tenant au niveau de la paroi arrière (8) du profilé isolant.
